# EUROPEAN PATENT SPECIFICATION

(11) **EP 4 446 184 B1**
(45) Date of publication and mention of the grant of the patent: **03.12.2025**
(21) Application number: 22927069.9
(22) Date of filing: 17.02.2022
(51) Int. Cl.: B60W 10/26, B60W 10/06, B60W 10/08, B60W 20/13, B60W 20/20, B60W 20/40

(54) **HYBRID VEHICLE**
HYBRIDFAHRZEUG
VÉHICULE HYBRIDE

(43) Date of publication of application: 16.10.2024
(73) Proprietor: Mitsubishi Jidosha Kogyo Kabushiki Kaisha, Tokyo 108-8410 (JP)
(72) Inventor: MURASE Masahiro, Tokyo 108-8410 (JP)
(74) Representative: Vossius & Partner Patentanwälte Rechtsanwälte mbB
(86) International application number: PCT/JP2022/006349
(87) International publication number: WO 2023/157167

(56) References cited:
- JP-A- 2018 008 544
- JP-A- 2018 100 013
- JP-A- 2018 100 013
- US-A1- 2021 291 805
- US-B2- 10 059 326
- US-B2- 9 718 457

## Description

### [Technical Field]

The present invention relates to a hybrid vehicle provided with an engine and a motor.

### [Background Technique]

In a conventional hybrid vehicle provided with an engine and a motor, one of multiple running modes is selected in accordance with a running state, and the operating states of the engine and the motor are controlled in accordance with the selected running mode. Examples of the running modes include: an EV (Electric Vehicle) running mode in which the vehicle runs only with driving force of a motor; and a hybrid running mode in which the vehicle runs using the engine and the motor in combination. The hybrid running mode includes a parallel running mode in which the vehicle runs by transmitting the driving force of the engine and the motor to the driving wheels, and a series running mode in which the vehicle runs by transmitting the driving force of the motor to the driving wheels while causing a generator to generate electric power using the driving force of the engine (for example, refer to Patent Document 1).

### [Prior Art Reference]

### [Patent Document]

[Patent Document 1] JP 2018-100013 A

### [Summary Of Invention]

### [Problems To Be Solved By Invention]

The technique described in Patent Document 1 determines whether or not a battery voltage declines to a lower limit voltage as a requirement for switching the running mode from the EV running mode to the hybrid running mode. This control can suppress the consumption of the battery electric power or can charge the battery with electric power by starting the engine when the amount of the battery electric power comes to be small, for example. On the other hand, a decline in the battery voltage brings down a battery upper limit output and a driving torque of the vehicle, so that a running feeling is degraded. This degradation of the running feeling may occur regardless of whether the engine is started or not.

With the foregoing problems in view, one of the objects of the present invention to provide a hybrid vehicle that can enhance the running feeling. In addition to this object, an influence and an effect which are derived from each configuration of "an embodiment to carry out the invention" to be described below and which conventional technique does not attain are regarded as other objects of the present disclosure.

### [Means To Solve Problems of Invention]

The disclosed hybrid vehicle can be implemented as an embodiment or application example disclosed below, and solves at least a part of the above problems.

The disclosed hybrid vehicle includes an engine and a motor that operate independently of each other; a battery that stores electric power to drive the engine and the motor; and a control device that controls operating states of the engine and the motor. If a voltage of the battery declines to a threshold higher than a lower limit voltage, the control device performs output suppression control that gradually reduces a battery output of the battery, the hybrid vehicle has an EV priority mode and a normal mode, each of the EV priority mode and the normal mode having a requirement for starting the engine when the motor is operating but the engine is not operating, the requirement in the EV priority mode is set more strictly in contrast to the normal mode, and the requirement in the normal mode is set more loosely in contrast to the EV priority mode, the control device separates the battery output from a first upper limit value and brings the battery output close to a second upper limit value in the output suppression control in the EV priority mode, the first upper limit value is an upper limit value of the battery output in the EV priority mode, and the second upper limit value is an upper limit value of the battery output in the normal mode.

### [Effect of Invention]

The disclosed hybrid vehicle can prolong the time for which the motor can be continuously used (the time it takes for the battery voltage to reach the lower limit voltage) by performing output suppression control for gradual decline of the battery output if the voltage of the battery declines to a threshold, so that the running feeling of the vehicle can be enhanced.

### [Brief Description of Drawings]

[FIG. 1] FIG. 1 is a block diagram showing a configuration of a hybrid vehicle.
[FIG. 2] FIGs. 2A and 2B are examples of a map related to setting of a threshold.
[FIG. 3] FIG. 3 is an example of a flow chart of output suppression control.
[FIG. 4] FIG. 4 is an example of a flow chart of setting of a running mode and output suppression control.
[FIG. 5] FIGs. 5A-5F are time charts illustrating control action.

### [Embodiment To Carry Our Invention]

The hybrid vehicle disclosed herein can be carried out according to the following embodiment.

### [Embodiment(s)]

### 1. Configuration of Device

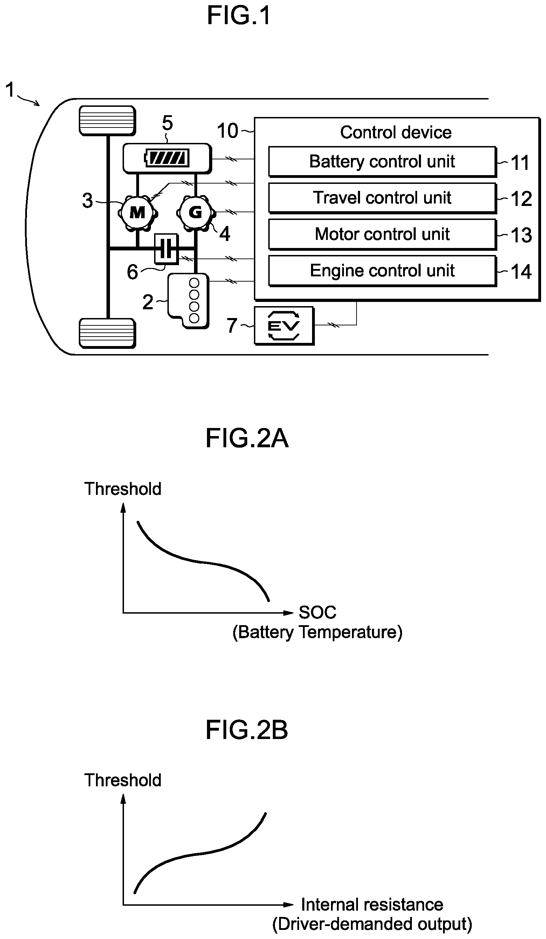

FIG. 1 is a block diagram illustrating a configuration of a hybrid vehicle 1 according to an embodiment. The hybrid vehicle 1 (also simply referred to as vehicle 1) is a hybrid vehicle (HEV: Hybrid Electric Vehicle) or plug-in hybrid vehicle (PHEV: Plug-in Hybrid Electric Vehicle) in which an engine 2 and a motor 3 serving as driving sources, a generator 4 serving as a power generation device, and a battery 5 serving as a power storage device are mounted. A plug-in hybrid vehicle means a hybrid vehicle capable of externally charging the battery 5 with electric power or of external power supply from the battery 5. The plug-in hybrid vehicle is provided with a charging port (inlet) into which a charging cable supplied with electric power from an external charging facility is inserted or a socket (outlet) for external power supply.

The engine 2 is exemplified by an internal combustion engine such as a gasoline engine or a diesel engine. To the drive shaft of the engine 2, the generator 4 is coupled. The generator 4 is an electric-energy-generating equipment (motor generator, dynamo-electric machine) having a function of driving the engine 2 with the electric power of the battery 5 and a function of generating electric power using the driving force of the engine 2. The electric power generated by the generator 4 is used for driving the motor 3 and charging the battery 5. A non-illustrated transmission mechanism may be interposed on a power transmission path connecting the engine 2 and the generator 4 to each other.

The motor 3 is a kinetic-energy-generating equipment (motor-generator, dynamo-electric machine) having a function for running the vehicle 1 using the electric power of the battery 5 or electric power generated by the generator 4, and a function for charging the battery 5 with electric power generated by regenerative power generation by itself. The battery 5 is a rechargeable battery (secondary battery) such as a lithium-ion secondary battery or a nickel metal hydride battery. The drive shaft of the motor 3 is coupled to the drive wheels of the vehicle 1. A non-illustrated transmission mechanism may be interposed on a power transmission path connecting the motor 3 and the driving shaft to each other.

A clutch 6 is interposed on a power transmission path connecting the engine 2 and the motor 3 to each other. The engine 2 is connected to the drive wheels via the clutch 6, and the motor 3 is arranged on the side of the driving wheels from the clutch 6. The generator 4 is connected on the side of the engine 2 from the clutch 6. When the clutch 6 is disengaged (released), the engine 2 and the generator 4 come into a disconnected state from the drive wheels, and the motor 3 comes into a connected state to the drive wheels. Therefore, by operating only the motor 3, for example, an "EV running mode (pure-electric running mode)" is achieved. In addition to this, a "series-running mode" is achieved by additionally activating the engine 2 to cause the generator 4 to generate electric power.

On the other hand, when the clutch 6 is coupled (engaged), three components of the engine 2, the motor 3, and the generator 4 are connected to the drive wheels. Therefore, for example, by operating only the engine 2, an "engine running mode (pure-engine running mode)" is achieved. In addition to this, by driving the motor 3 and the generator 4, a "parallel running mode" is achieved. Both the series running mode and the parallel running mode are sub-modes included in the "hybrid running mode", and at least one of these sub-modes can be implemented. Among the above running modes, one running mode is selected in accordance with the running state of the vehicle 1 in the control device 10.

This vehicle 1 is provided with an EV priority mode switch 7. The EV priority mode switch 7 is a button or a lever for changing a requirement for switching the running mode from the EV running mode to the hybrid running mode (series running mode or parallel running mode), and is flicked on/off by the driver. The information of the operating position of the EV priority mode switch 7 is transmitted to the control device 10. In the present embodiment, when the EV priority mode switch 7 is flicked to the on-position, the control state of the running mode is set to the "EV priority mode". When the EV priority mode switch 7 is flicked to the off-position, the state of the vehicle 1 is set to the "normal mode".

The EV priority mode is a mode in which the EV running mode is preferentially performed over the hybrid running mode as compared with in the normal mode. In other words, the EV priority mode is a mode in which the engine 2 is less likely to be started than the normal mode. Therefore, focusing on a requirement (engine starting requirement) for starting the engine 2 when the motor 3 is operating but the engine 2 is not operating, the engine starting requirement in the EV priority mode is stricter in contrast to the engine starting requirement in the normal mode. Conversely, the normal mode is a mode in which the EV running mode is less preferentially performed than the EV priority mode. In other words, the normal mode is a mode in which engine 2 is more likely to be started than the EV priority mode. Therefore, the engine starting requirement in the normal mode is looser in contrast to the engine starting requirement in EV priority mode (lenient determination for the engine starting is made in the normal mode).

### 2. Configuration of Control

The respective operating states of the engine 2, the motor 3, the generator 4, the battery 5, the clutch 6 are controlled by the control device 10. The control device 10 is a computer (ECU: Electronic Control Unit) that selects one from multiple running modes in accordance with the running state of the vehicle 1 and performs control suitable for the selected running mode. The control device 10 includes a processor (arithmetic processing device) and a memory (storing device). The content of the control (control program) performed by the control device 10 is stored in the memory, and is executed by being appropriately read by the processor.

In the control device 10, a battery control unit 11, a running control unit 12, a motor control unit 13, and an engine control unit 14 are provided. These elements represent the functions of the control device 10 being classified for convenience, and can be achieved by software (program) or hardware (electronic controlling circuit). These elements may be integrated into one piece of software or hardware, or may be dispersed into multiple pieces of software and hardware.

For example, the battery control unit 11 may be incorporated in a battery ECU (BMU: Battery Management Unit) that manages the battery 5. In addition, the running control unit 12 may be incorporated in a vehicle ECU (e.g., running control ECU exemplified by a HEV-ECU or a PHEV-ECU) that manages the power train of the vehicle 1. Further, the motor control unit 13 may be incorporated in a motor ECU (MCU: Motor Control Unit) that manages the motor 3. In addition, the engine control unit 14 may be incorporated in an engine ECU that manages the engine 2.

The battery control unit 11 manages the operating state of the battery 5 and calculates various parameters representing the operating state of the battery 5. The battery control unit 11 calculates a charge rate (SOC: State of Charge), a soundness (SOH: State of Health), an output-state (SOP: State of Power), and the like on the basis of information such as the voltage, the electric current, the internal resistance and the battery temperature of the battery 5. The information such as the voltage, the electric current, and the battery temperature of the battery 5 is detected by a voltage sensor, a current sensor, and a temperature sensor which are not illustrated. The value of the internal resistance is calculated on the basis of the voltage, the electric current of the battery 5 and the battery temperature.

The battery control unit 11 calculates, as the output state described above, a "battery output" of the battery 5 and the "upper limit output" which is upper limit value (maximum value) of the battery output. The battery output means electric power (kW, kilowatt) drawn from the battery 5 to drive the motor 3 or various electrical components. The value of the battery output is calculated on the basis of the electric current and the voltage discharged from the battery 5. The upper limit output is the electric power (kW) corresponding to the rated output of the battery 5, and means the upper limit value of the battery output that can be drawn and used from the battery 5 at that time. The value of the upper limit output is set according to the operating state (e.g., charge rate, soundness, voltage, electric current, the internal resistance, battery temperature) of the battery 5 and the running state (e.g., running mode, vehicle speed, outside air temperature, accelerator opening degree, brake opening degree) of the vehicle 1. The value of the upper limit output in the EV priority mode is set higher than the value of the upper limit output in the normal mode. Here, setting the value of the upper limit output in the EV priority mode to a "first upper limit value", and setting the value of the upper limit output in the normal mode to a "second upper limit value", the relationship "first upper limit value >second upper limit value" is satisfied (i.e. the above inequality holds true).

In addition, the battery control unit 11 performs the output suppression control if the voltage of the battery 5 declines to the threshold. The output suppression control is control to conserve the electric power of the battery 5 by weakening the motor output for driving the vehicle 1 on purpose. The output suppression control is performed if the voltage of the battery 5 declines to the threshold. The threshold included in a requirement for starting the output suppression control may be a fixed value set in advance or may be a variable value set in accordance with the operating state of the battery 5 or the running state of the vehicle 1.

The battery control unit 11 of the present embodiment may set the threshold on the basis of a charge rate (SOC), battery temperature, an internal resistance of the battery 5, a driver-demanded torque (a torque corresponding to a driving force that the driver demanded for the vehicle 1) to be described below, or the like. For example, as the charge rate of the battery 5 or the battery temperature of the battery 5 are lower, the lowering rate of the battery voltage is likely to increase. For the above, as shown in FIG. 2A, the threshold may be set to a higher value as the charge rate or the battery temperature of the battery 5 is lower. In addition, as the internal resistance of the battery 5 or the driver-demanded torque is larger, the lowering rate of the battery voltage is likely to increase. For the above, as shown in FIG. 2B, the threshold may be set to a higher value as the internal resistance of the battery 5 or the driver-demanded torque is larger.

The threshold is set to be at least higher than the lower limit voltage of the battery 5. The lower limit voltage of the battery 5 is a voltage that is set in advance to allow a margin for the operation of the battery 5 for the purpose of control, and has a value slightly higher than a minimum voltage (a limit value that the battery 5 has) that can appropriately use the battery 5. Without special circumstances, the battery 5 is controlled such that the battery voltage thereof does not decline below the lower limit voltage.

In the output suppression control, the battery 5 is controlled such that the battery output gradually declines. The battery output can be reduced by reducing the electric current output from the battery 5, for example. The battery output can also be reduced by reducing the electrical load acting on the battery 5. For example, if the motor output is reduced, the battery output decreases. Consequently, the battery output can be regulated by controlling the operating states of the battery 5 and the motor 3. In this meaning, the motor control unit 13 may be caused to perform the output suppression control in place of the battery control unit 11.

Furthermore, if the output suppression control is performed under a circumstance where the battery output is a second upper limit or more in the EV priority mode, the battery 5 is controlled such that the battery output decreases and also approaches the second upper limit value. At this time, the battery output approaches the second upper limit value while separating from the first upper limit value. By lowering the battery output, the lowering rate of the battery voltage becomes slow (small), which prolongs the time it takes for the battery voltage to reach the lower limit voltage. This output suppression control is continued until the engine starting requirement is satisfied, and is terminated when the engine starting requirement is satisfied. When the battery output reaches the second upper limit value, the output suppression control may be terminated by starting the engine 2.

The running control unit 12 manages the running state of the vehicle 1 and calculates various parameters representing the running state of the vehicle 1. The running control unit 12 calculates a driver-demanded torque based on information such as an accelerator opening degree, a brake opening degree, and a vehicle speed. Further, the running control unit 12 selects and sets one running mode from among the multiple running modes in accordance with the calculated driver-demanded torque, the calculated operating state (e.g., charge rate, soundness, voltage, electric current, internal resistance, and battery temperature) of the battery 5, and the calculated running state (e.g., vehicle speed, outside air temperature, accelerator opening degree, and brake opening degree) of the vehicle 1. Information on the accelerator opening degree and the brake opening degree is detected by an accelerator pedal sensor and a brake pedal sensor, or a brake fluid pressure sensor which are not illustrated. Information on the vehicle speed and the outside air temperature are detected by a vehicle speed sensor and an outside air temperature sensor which are not illustrated.

The running control unit 12 of the present embodiment determines whether or not to change the running mode to the hybrid running mode by determining a requirement (engine starting requirement) for starting the engine 2 during the EV running mode (i.e., when the motor 3 is operating but the engine 2 is not operating). The engine starting requirement determined here is different between for the EV priority mode and for the normal mode, and the engine starting requirement is set more strictly (less likely to be changed to the hybrid-running mode) in the EV priority mode in contrast to the normal mode.

The engine starting requirement in the EV priority mode is listed below.
Condition A: the battery output reaches the first upper limit value.
Condition B: the driver-demanded torque is a first torque or more.
Condition C: the vehicle speed is a first speed or more.
Condition D: the accelerator opening degree is a first predetermined opening degree or more.
Condition E: the charge rate of the battery 5 is a first predetermined charge rate or less.
Condition F: the voltage of the battery 5 is a lower limit voltage or less.

The engine starting requirement in the normal mode is listed below.
Condition G: the battery output reaches the second upper limit value.
Condition H: the driver-demanded torque is a second torque or more.
Condition I: the vehicle speed is a second speed or more.
Condition J: the accelerator opening degree is a second predetermined opening degree or more.
Condition K: the charge rate of the battery 5 is a second predetermined charge rate or less.
Condition L: the voltage of the battery 5 is the lower limit voltage or less.

Condition G is preferably set together with Condition A. Similarly, Condition H is preferably set together with Condition B, and Condition I is preferably set together with Condition C. Condition J is preferably set together with Condition D, Condition K is preferably set together with Condition E, and Condition L is preferably set together with Condition F. In any case, in the EV priority mode, the engine starting requirement is generally less likely to be satisfied than in the normal mode.

For the values included in Condition A to Condition L, the preferable magnitude relationships are listed below.
• second upper limit value ≤ first upper limit value
   (more preferably, second upper limit value < first upper limit value)
• second torque ≤ first torque
   (more preferably, second torque < first torque)
• second vehicle speed ≤ first vehicle speed
   (more preferably, second vehicle speed < first vehicle speed)
• second predetermined opening degree ≤ first predetermined opening degree
   (more preferably, second predetermined opening degree < first predetermined opening degree)
• first predetermined charge rate ≤ second predetermined charge rate
   (more preferably, the first predetermined charge rate < second predetermined charge rate)

The motor control unit 13 manages the operating state of the motor 3. Here, the operating state of the motor 3 is controlled such that a motor output suitable for the running mode set by the running control unit 12 is obtained. The operating state of the motor 3 can be controlled by adjusting the operation of a non-illustrated inverter interposed on a high voltage circuitry between the battery 5 and the motor 3. For example, in the EV running mode or the series running mode, the inverter is controlled such that the motor torque equivalent to the driver-demanded torque is generated in the allowable range of the battery output. In the parallel running mode, the inverter is controlled such that the sum of the engine torque and the motor torque comes to be an equivalent value to the driver-demanded torque. The driving torque of the vehicle 1 in the EV running mode has a magnitude corresponding to the output torque of the motor 3.

The engine control unit 14 manages the operating state of the engine 2. Here, the operating state of the engine 2 and non-illustrated accessories are controlled such that a motor output suitable for the running mode set by the running control unit 12 is obtained. The engine control unit 14 may be configured to control, if the generator 4 generates electric power by using the driving force of the engine 2, both the engine 2 and the generator 4.

The operating state of the engine 2 can be controlled by adjusting the operation of a non-illustrated fuel injection valve, a non-illustrated throttle valve, a non-illustrated starter motor, and the generator 4, for example. For example, in the engine running mode, the fuel injection valve, the throttle valve, and/or the like are controlled such that the engine torque equivalent to the driver-demanded torque is generated. The driving torque of the vehicle 1 in the engine running mode corresponds to the magnitude of the output torque of the engine 2.

Further, in the parallel running mode, the fuel injection valve, the throttle valve and/or the like is controlled such that the sum of the engine torque and the motor torque comes to be an equivalent value to the driver-demanded torque. The driving torque of the vehicle 1 in the parallel running mode corresponds to the magnitude of the sum of the output torque of the engine 2 and the output torque of the motor 3. On the other hand, in the series running mode, the fuel injection valve, the throttle valve, and/or the like are controlled such that the engine 2 continues to operate in an efficient operating range, and also the operating state of the generator 4 (non-illustrated inverter interposed on the high-voltage circuitry between the battery 5 and the generator 4) is controlled. The driving torque of the vehicle 1 in the series running mode has a magnitude corresponding to the output torque of the motor 3.

### 3. Flow chart

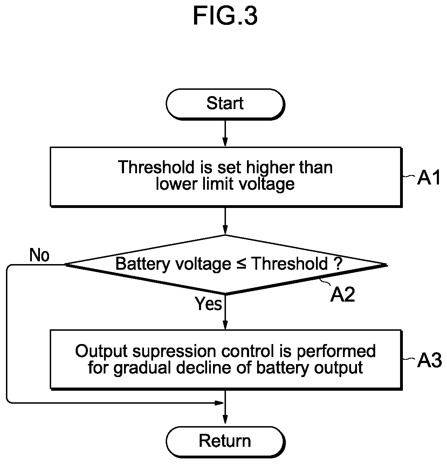

FIG. 3 is an example of a flow chart of control related to the output suppression control. The control illustrated in this flow chart is repeatedly executed in the control device 10 at a predetermined cycle under a state where at least the motor 3 is operating (for example, during the EV running mode or the hybrid running mode). The control illustrated in this flow chart can be performed if the hybrid vehicle 1 has at least a running mode in which the motor 3 operates, and the vehicle 1 may have or may not have the EV priority mode switch 7 (i.e., the EV priority mode and the normal mode).

In Step A1, in the battery control unit 11, the threshold included in the requirement for starting the output suppression control is set. The threshold is set to a value at least higher than the lower limit voltage of the battery 5. In the succeeding Step A2, determination as to whether or not the voltage of the battery 5 is a threshold or less is made. If the result of this determination is positive, the control proceeds to Step A3 and the output suppression control is executed. On the other hand, if the result of the determination in Step A2 is negative, the control in this cycle ends.

In the output suppression control, the battery 5 is controlled such that the battery output gradually declines before the voltage of the battery 5 declines to the lower limit voltage. As a result, the lowering rate of the battery voltage becomes small, which prolongs the time it takes for the battery voltage to reach the lower limit voltage. This means that the time for which the motor 3 is continuously used is prolonged, in other words, the range for which the vehicle can run without starting the engine 2 is prolonged. Therefore, the running feeling of the vehicle 1 is enhanced.

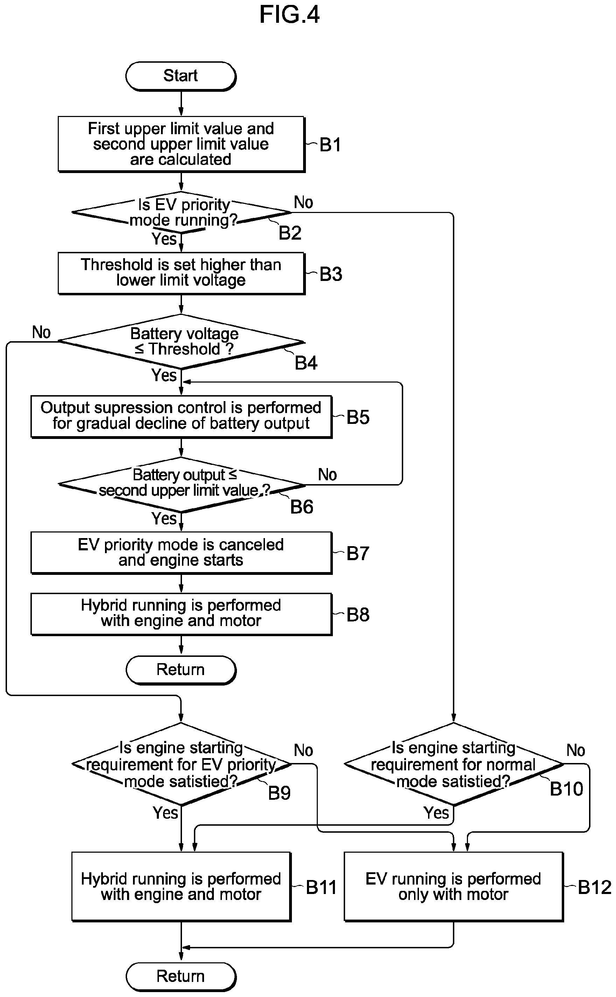

FIG. 4 is an example of a flow chart of the control related to setting of a running mode and the output suppression control. The control illustrated in this flow chart is repeatedly executed in the control device 10 at a predetermined cycle under a state where at least the motor 3 is operating but the engine 2 is stopped (for example, during the EV running mode). The control in this flow chart loosens the starting requirement for the engine 2 in the EV priority in contrast to the normal mode. Steps B3 to B5 in FIG. 4 correspond to Steps A1 to A3 in FIG. 3, respectively. The control illustrated in this flow chart can be executed in the hybrid vehicle 1 having the EV running mode and the hybrid running mode and also having the EV priority mode switch 7 (EV priority mode and the normal mode).

In Step B1, the first upper limit value and the second upper limit value are calculated on the basis of the operating state of the battery 5 and the running state of the vehicle 1. The first upper limit value is the value of the upper limit output in the EV priority mode, and the second upper limit value is the value of the upper limit output in the normal mode. In the following Step B2, determination is made as to whether or not the control state on the running mode is the EV priority mode on the basis of the operating position of the EV priority mode switch 7. If in the EV priority mode, the process proceeds to Step B3, and if not in the EV priority mode (if in the normal mode), the process proceeds to Step B10. The former route uses the first upper limit value as the upper limit output of the battery 5, and the latter route uses the second upper limit value as the upper limit output of the battery 5.

If the process proceeds to Step B3 (if in the EV priority mode), the threshold included in the requirement for starting the output suppression control is set in the battery control unit 11. The threshold is set higher than the lower limit voltage of the battery 5. In the succeeding Step B4, determination as to whether or not the voltage of the battery 5 is a threshold or less is made. If the result of this determination is positive, the control proceeds to Step B5, and if the result of this determination is negative, the control proceeds to Step B9.

In Step B5, the output suppression control is performed in which the battery 5 is controlled such that the battery output gradually declines. Furthermore, in the subsequent Step B6, determination is made as to whether or not the battery output declines to the second upper limit value. If the result of this determination is negative, the control returns to Step B5 and the output suppression control is continued until the battery output reaches the second upper limit value. On the other hand, if the battery output declines to the second upper limit value, the control proceeds to Step B7.

In Step B7, the EV priority mode is canceled and the operating position of the EV priority mode switch 7 is automatically shifted to the off-position. In addition, the engine control unit 14 starts the engine 2. After that, in Step B8, the running mode is switched from EV running mode to the hybrid running mode (series running mode or parallel running mode), and the control in this cycle ends. If the series running mode of the hybrid running mode is implemented, the control that causes the generator 4 to generate electric power using the driving force of the engine 2 is implemented and also the control of running using the driving force of the motor 3 is implemented. If the parallel running mode of the hybrid running mode is implemented, the control of running using the driving force of the engine 2 and the motor 3 is implemented. The operating state of the motor 3 is controlled by the motor control unit 13. The operating states of the engine 2 and the generator 4 are controlled by the engine control unit 14.

If the process proceeds from Step B4 to Step B9, determination is made as to whether or not the engine starting requirement for the EV priority mode is satisfied. For example, determination is made as to whether any one of the above Conditions A to F is satisfied. If the engine starting requirement for the EV priority mode is satisfied, the control proceeds to Step B11, the engine control unit 14 drives the engine 2, and the running mode is switched from the EV running mode to the hybrid running mode (series running mode or parallel running mode) to terminate the control in this cycle. On the other hand, if the result of the determination in Step B9 is negative, the control proceeds to Step B12 in which the EV running mode is kept, and the control in this cycle ends.

If the process proceeds from Step B2 to Step B10, determination is made as to whether or not the engine starting requirement for the normal mode is satisfied. For example, determination is made as to whether any one of the above Conditions G to L is satisfied. If the engine starting requirement for the normal mode is satisfied, the control proceeds to Step B11 in which the running mode is switched from the EV running mode to the hybrid running mode (series running mode or parallel running mode), and the control in this cycle ends. On the other hand, if the result of the determination in Step B10 is negative, the control proceeds to Step B12 in which the EV running mode is kept, and the control in this cycle ends.

### 4. Time Chart

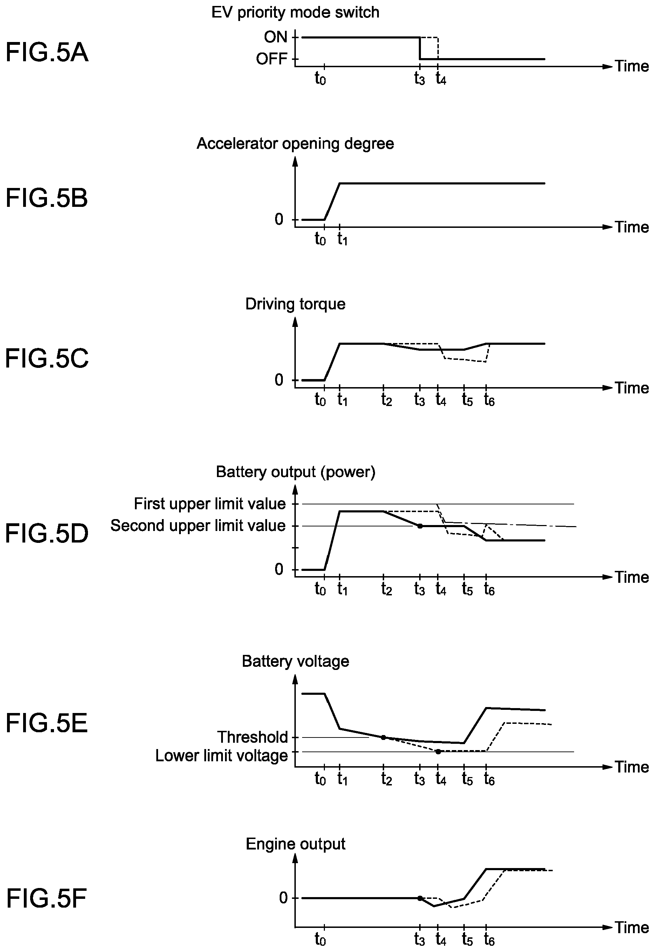

FIGs. 5A to FIG. 5F are time charts for explaining a control action when the output suppression control is performed in the EV priority mode. FIG. 5A shows the chronological change of the operating position of the EV priority mode switch 7, FIG. 5B shows the chronological change in the accelerator opening degree, and FIG. 5C shows the chronological change in the driving torque of the vehicle 1. In addition, FIG. 5D shows a chronological change of the battery output, FIG. 5E represents a chronological change in the battery voltage, and FIG. 5F represents a chronological change in the engine output.

As indicated by the solid line in FIG. 5A, the operating position of the EV priority mode switch 7 before the time t₀ is the on-position, and the EV priority-mode is set. Further, as indicated by the solid line in FIG. 5F, the engine output before the time t₀ is 0 (engine 2 is not operating), and the running mode is the EV running mode. As indicated by the solid line in FIG. 5B, it is assumed that the driver increases the accelerator opening degree at the time t₀ and makes an operation to keep the then accelerator opening degree at the time t₁.

With the increase in the accelerator opening degree, the outputting torque of the motor 3 increases, and as shown by the solid line in FIG. 5C, the driving torque of the vehicle 1 increases. Further, as indicated by the solid line in FIG. 5D, the battery output of the battery 5 increases. The battery output increases from the time t₀ to the time t₁, and is kept at a value corresponding to the accelerator opening degree after the time t₁. The battery output at this time shall exceed the second upper limit value. On the other hand, as indicated by the solid line in FIG. 5E, the battery voltage largely decreases from the time t₀ to the time t₁, and gradually decreases after the time t₁.

When the battery voltage drops to the threshold at time t₂, the output suppression control is performed. As indicated by the solid line in FIG. 5D, the battery output gradually declines, separates away from the first upper limit value, and approaches the second upper limit value. At this time, the driving torque of the vehicle 1 slightly decreases after the time t₂ as indicated by the solid line in FIG. 5C. After that, when the battery output declines to the second upper limit value at the time t₃, the output suppression control ends and control is performed to start the engine 2. At this time, as indicated by the solid line in FIG. 5A, the operating position of the EV priority mode switch 7 is automatically shifted to the off-position.

The engine output temporarily becomes a negative value immediately after the time t₃, but increases as the rotational state of the engine 2 stabilizes. The time t₅ is the time when the engine output reaches approximately 0, and the time t₆ is the time when the engine output reaches the predetermined output. After the time t₆, the predetermined output is maintained, and the operating state of the engine 2 is stabilized. This also stabilizes the power generation state of the generator 4.

As indicated by the solid line in FIG. 5E, the battery voltage gradually decreases with a gentle gradient from the time t₂ to the time t₅. After that, the battery output rises from the time t₅ at which the engine output becomes a positive value to the time t₆, and gradually declines with a gentile gradient after the time t₆. Furthermore, as indicated by the solid line in FIG. 5D, the battery output is maintained at a substantially constant value from the time t₃ to the time t₅, decreases from the time t₅ to the time t₆, and becomes a substantially constant value after the time t₆.

As shown by the solid line in FIG. 5C, the driving torque decreases from the time t₂ to the time t₃, but comes to be constant from the time t₃ to the time t₅ likewise the battery output. In addition, during the period from the time t₅ to the time t₆, the battery voltage rises, which is followed by rise in the driving torque. The driving torque after the subsequent time t₆ comes to be substantially constant. In this way, performing the output suppression control weakens the driving torque (motor output) of the vehicle 1 to some extent before the battery voltage reaches the lower limit voltage, and the electric power of the battery 5 is consequently conserved. As a result, since the driving torque of the vehicle 1 does not rapidly decline after the time t₃ when the engine 2 is started, the running feeling is enhanced.

The dashed lines in FIGS. 5A to 5F are graphs as a comparative example, and show the control action when the output suppression control is not performed. If the output suppression control is not performed, a state where the battery output is high is kept after the time t₂, as indicated by the dashed line in FIG. 5D. As a result, as indicated by the dashed line in FIG. 5E, the battery voltage declines also after the time t₂, and reaches the lower limit voltage at the time t₄. At this time, as indicated by the one-dotted dashed line in FIG. 5D, the upper limit value (first upper limit value) of the battery 5 can be greatly limited. In this case, as indicated by the dashed line in FIG. 5D, the battery output decreases at the time t₄, and gradually decreases after the time t₄. Therefore, as indicated by the dashed line in FIG. 5C, it can be understood that the driving torque after the time t₄ decreases to make it impossible to obtain preferable running feeling.

### 5. Influence and Effect

(1) The hybrid vehicle 1 of the present embodiment includes: the engine 2 and the motor 3 that operate independently of each other; a battery 5 that stores electric power to operate the engine 2 and the motor 3; and a control device 10 that controls operating states of the engine 2 and the motor 3. The control device 10 performs the output suppression control that gradually lowers the battery output when the voltage of battery 5 declines to a threshold higher than the lower limit voltage. This control can prolong the time it takes for the voltage of the battery 5 to reach the lower limit voltage, and can prolong the time for which the motor 3 can be continuously used. Accordingly, the running feeling of the vehicle can be enhanced.
(2) The above hybrid vehicle 1 may have the EV priority mode and the normal mode. In the EV priority mode, the requirement for starting the engine 2 when the motor 3 is operating but the 2 is not operating is set more strictly in contrast to the normal mode. In other words, the engine starting requirement for the normal node is set more loosely in contrast to the EV priority mode. In addition, the control device 10 may perform control that separates the battery output from the first upper limit value and brings the battery output close to the second upper limit value in the output suppression control in the EV priority mode.
   The first upper limit value is an upper limit value of the battery output in the EV priority mode, and the second upper limit value is the upper limit value of the battery output in the normal mode. By lowering the battery output, which can be a value close to the first upper limit value, to the second upper limit value as the above, it is possible to reserve sufficient surplus power of the battery output. This can prolong the time for which the motor 3 can be continuously used and further enhance the running feeling of the vehicle 1.
(3) During the output suppression control described above, if the battery output declines to the second upper limit value, the engine 2 may be started and also the output suppression control may be terminated. This control can start the engine 2 under a state where sufficient surplus power of the battery output is reserved. Accordingly, it is possible to suppress sudden decrease or fluctuation in the driving torque between before and after the start of the engine 2, so that the running feeling of the vehicle 1 can be further enhanced.
(4) In regard of setting of the threshold, as illustrated in FIG. 2A, the threshold may be set to a higher value as the charge rate or the battery temperature of the battery 5 is lower. In this way, by setting the threshold high in a situation where the reduction rate of the battery voltage tends to increase, the requirement for starting the output suppression control can be eased to advance the timing of starting the output suppression control. Accordingly, it is possible to further prolong the time it takes for the voltage of the battery 5 to reach the lower limit voltage. In addition, it is possible to increase the surplus power of the battery output reserved by the output suppression control. Therefore, the running feeling of the vehicle 1 can be further enhanced.
(5) Similarly, as illustrated in FIG. 2B, the threshold may be set to a higher value as the internal resistance of the battery 5 or the driver-demanded torque is larger. The reduction rate of the battery voltage increases as the internal resistance of the battery 5 is larger or the driver-demanded torque is larger. By setting the threshold high under such a situation, time for performing the output suppression control and the surplus power of the battery output can be sufficiently secured, and the running feeling of vehicle 1 can be further enhanced.

### 6. Miscellaneous

The foregoing embodiment is illustrative only and is not intended to preclude the application of various modifications and techniques not explicitly set forth in the present examples. Each configuration of the present embodiment can be variously modified and implemented without departing from the scope of the invention as defined in the appended claims. Also, the configuration can be selected or omitted according to the requirement or can be appropriately combined. For example, although the above vehicle 1 is provided with the EV priority mode switch 7, the EV priority mode switch 7 can be omitted. Alternatively, the EV priority mode and the normal mode may be automatically set according to known requirement. Further alternatively, the EV priority mode and the normal mode may be omitted. This means that the requirement for switching the running mode from the EV running mode to the hybrid running mode may be fixed. The same actions and effects as the above embodiment can be obtained by at least performing the output suppression control when the voltage of the battery 5 declines to the threshold.

### [Industrial Applicability]

The present invention is applicable to industries of producing hybrid vehicles and industries of producing control devices mounted on hybrid vehicles.

### [Description of Reference Signs]

1: vehicle (hybrid vehicle)
2: engine
3: motor
4: generator
5: battery
6: clutch
7: EV priority mode switch
10: control device
11: battery control unit
12: running control unit
13: motor control unit
14: engine control unit

## Claims

1. A hybrid vehicle (1) comprising:
an engine (2) and a motor (3) that operate independently of each other:
a battery (5) that stores electric power to operate the engine (2) and the motor (3); and
a control device (10) that controls operating states of the engine (2) and the motor (3), wherein
if a voltage of the battery (5) declines to a threshold higher than a lower limit voltage, the control device (10) performs output suppression control that gradually reduces a battery output of the battery (5),
the hybrid vehicle being **characterized by** having an EV priority mode and a normal mode, each of the EV priority mode and the normal mode having a requirement for starting the engine when the motor is operating but the engine is not operating,
the requirement in the EV priority mode is set more strictly in contrast to the normal mode, and the requirement in the normal mode is set more loosely in contrast to the EV priority mode,
the control device (10) separates the battery output from a first upper limit value and brings the battery output close to a second upper limit value in the output suppression control in the EV priority mode,
the first upper limit value is an upper limit value of the battery output in the EV priority mode, and
the second upper limit value is an upper limit value of the battery output in the normal mode.

2. The hybrid vehicle (1) according to claim 1, wherein
the control device (10) terminates the output suppression control by starting the engine when the battery output declines to the second upper limit value in the output suppression control in the EV priority mode.

3. The hybrid vehicle (1) according to claim 1 or 2, wherein
the threshold is set to a higher value as a charge rate of the battery or a battery temperature of the battery (5) is lower.

4. The hybrid vehicle (1) according to claim 1 or 2, wherein
the threshold is set to a higher value as an internal resistance of the battery or a driver demand torque is higher.

## Patentansprüche

1. Hybridfahrzeug (1), aufweisend:
einen Verbrennungsmotor (2) und einen Motor (3), die unabhängig voneinander arbeiten;
eine Batterie (5), die elektrische Energie für den Betrieb des Verbrennungsmotors (2) und des Motors (3) speichert;
und
eine Steuervorrichtung (10), die Betriebszustände des Verbrennungsmotors (2) und des Motors (3) steuert,
wobei
die Steuervorrichtung (10) eine Leistungsunterdrückungssteuerung durchführt, die eine Batterieleistung der Batterie (5) schrittweise reduziert, wenn eine Spannung der Batterie (5) auf einen Schwellenwert abfällt, der höher als eine untere Grenzspannung ist,
das Hybridfahrzeug **dadurch gekennzeichnet ist, dass** es einen EV-Prioritätsmodus und einen Normalmodus aufweist, wobei sowohl der EV-Prioritätsmodus als auch der Normalmodus eine Anforderung zum Starten des Verbrennungsmotors haben, wenn zwar der Motor in Betrieb ist, aber der Verbrennungsmotor nicht in Betrieb ist,
die Anforderungen im EV-Prioritätsmodus strenger als im Normalmodus sind und die Anforderungen im Normalmodus lockerer als im EV-Prioritätsmodus sind,
die Steuervorrichtung (10) die Batterieleistung von einem ersten oberen Grenzwert trennt und die Batterieleistung nahe an einen zweiten oberen Grenzwert in der Leistungsunterdrückungssteuerung im EV-Prioritätsmodus bringt,
der erste obere Grenzwert ein oberer Grenzwert der Batterieleistung im EV-Prioritätsmodus ist, und
der zweite obere Grenzwert ein oberer Grenzwert der Batterieleistung im Normalmodus ist.

2. Hybridfahrzeug (1) nach Anspruch 1, wobei die Steuervorrichtung (10) die Leistungsunterdrückungssteuerung durch Starten des Verbrennungsmotors beendet, wenn die Batterieleistung auf den zweiten oberen Grenzwert in der Leistungsunterdrückungssteuerung im EV-Prioritätsmodus abfällt.

3. Hybridfahrzeug (1) nach Anspruch 1 oder 2, wobei der Schwellenwert auf einen höheren Wert gesetzt wird, wenn die Ladegeschwindigkeit der Batterie oder die Batterietemperatur der Batterie (5) niedriger ist.

4. Hybridfahrzeug (1) nach Anspruch 1 oder 2, wobei der Schwellenwert auf einen höheren Wert gesetzt wird, wenn der Innenwiderstand der Batterie oder das vom Fahrer geforderte Drehmoment höher ist.

## Revendications

1. Véhicule hybride (1), comprenant :
un moteur thermique (2) et un moteur électrique (3) qui fonctionnent indépendamment l'un de l'autre ;
une batterie (5) qui emmagasine de l'énergie électrique afin de faire fonctionner le moteur thermique (2) et le moteur électrique (3) ; et
un dispositif de commande (10) qui commande les états de fonctionnement du moteur thermique (2) et du moteur électrique (3),
dans lequel
si la tension de la batterie (5) diminue jusqu'à un seuil supérieur à une tension limite inférieure, le dispositif de commande (10) effectue une commande de suppression de sortie qui réduit progressivement une sortie de batterie de la batterie (5),
le véhicule hybride étant **caractérisé en ce qu'**il est doté d'un mode priorité EV et d'un mode normal, le mode priorité EV et le mode normal ayant chacun une exigence de démarrage du moteur thermique lorsque le moteur électrique est en cours de fonctionnement, mais que le moteur thermique n'est pas en cours de fonctionnement,
l'exigence en mode priorité EV étant définie de manière plus stricte par rapport au mode normal, et l'exigence en mode normal étant définie de manière plus souple par rapport au mode priorité EV,
le dispositif de commande (10) sépare la sortie de batterie d'une première valeur limite supérieure et rapproche la sortie de batterie d'une deuxième valeur limite supérieure dans le cadre de la commande de suppression de sortie en mode priorité EV,
la première valeur limite supérieure est une valeur limite supérieure de la sortie de batterie en mode priorité EV, et
la deuxième valeur limite supérieure est une valeur limite supérieure de la sortie de batterie en mode normal.

2. Véhicule hybride (1) selon la revendication 1, dans lequel
le dispositif de commande (10) met fin à la commande de suppression de sortie en démarrant le moteur thermique lorsque la sortie de batterie diminue jusqu'à la deuxième valeur limite supérieure dans le cadre de la commande de suppression de sortie en mode priorité EV.

3. Véhicule hybride (1) selon la revendication 1 ou 2, dans lequel
le seuil est défini à une valeur plus élevée à mesure que le taux de charge de la batterie ou que la température de batterie de la batterie (5) diminue.

4. Véhicule hybride (1) selon la revendication 1 ou 2, dans lequel
le seuil est défini à une valeur plus élevée à mesure que la résistance interne de la batterie ou que le couple demandé par le conducteur augmente.
